# EUROPÄISCHE PATENTANMELDUNG

(11) **EP 4 610 180 A1**
(43) Veröffentlichungstag der Anmeldung: **03.09.2025**
(21) Anmeldenummer: 25159823.1
(22) Anmeldetag: 25.02.2025
(51) Int. Cl.: B65B 43/52, B65G 33/04

(54) **FÖRDERN VON VERPACKUNGSSCHALEN DURCH ANTRIEBSELEMENT MIT EINEM SCHRAUBENGANG**

(30) Priorität: 29.02.2024 DE 102024105775
(71) Anmelder: MULTIVAC Sepp Haggenmüller SE & Co. KG, 87787 Wolfertschwenden (DE)
(72) Erfinder: ICKERT, Lars, 87437 Kempten (DE)
(74) Vertreter: Grünecker Patent- und Rechtsanwälte PartG mbB

(57) **Zusammenfassung**

Ein Verfahren zum Bereitstellen von Verpackungsschalen (3) umfasst ein Führen von Verpackungsschalen (3) entlang einer Transportrichtung (15) in einem Führungskanal (29). Die in dem Führungskanal (29) aufgenommenen Verpackungsschalen (3) werden durch Drehen eines Antriebselements (37) mittels eines Antriebs (41) entlang der Transportrichtung (15) gefördert. Die Verpackungsschalen (3) sind in einem Schraubengang (39) des Antriebselements (37) aufgenommen.

## Beschreibung

Die Erfindung betrifft das Fördern und Bereitstellen von Verpackungsschalen, insbesondere das Fördern und Bereitstellen von Verpackungsschalen für nachfolgende Prozesse in einer Verpackungsmaschine oder Verpackungslinie.

Aus der DE 10 2018 222 836 A1 ist eine Verpackungsmaschine zum Herstellen einzelner Verpackungen bekannt, welche jeweils einen flach ausgebildeten Produktträger sowie eine Oberfolie umfassen, die ein auf dem Produktträger positioniertes Produkt gasdicht einschließt. Eine Siegelstation der Verpackungsmaschine umfasst ein Werkzeugoberteil mit einem Siegelwerkzeug sowie ein Werkzeugunterteil, das ein Bandfördermodul mit mindestens einem Transportband umfasst. Das Bandfördermodul nimmt außer seiner eigentlichen Transportfunktion zusätzlich die Funktion des Siegelwerkzeugunterteils ein und nimmt als Gegendrucklager eine von dem Siegelwerkzeug ausgeübte Siegelkraft auf.

Aus der DE 10 2012 015 401 B4 ist eine Schalenverschließmaschine bekannt, welche ein Greifersystem mit zwei Greiferarmen zur Aufnahme von Schalen umfasst, um die Schalen von einem Sammelband abzunehmen und in eine Verschließstation einzubringen. Das Greifersystem ist dazu konfiguriert, die Schalen mittels der Greiferarme seitlich zu erfassen und vom Sammelband abzuheben und in die Verschließstation zu übergeben.

Es ist eine Aufgabe der Erfindung, einen verbesserten Weg zum Bereitstellen von Verpackungsschalen bereitzustellen. Vorzugsweise sollen Verpackungsschalen zu einem gewünschten Ort gefördert werden und dort insbesondere in einem gewünschten Abstand zueinander bereitgestellt werden.

Gemäß einem Aspekt der Erfindung wird ein Verfahren zum Bereitstellen von Verpackungsschalen angegeben. Es werden Verpackungsschalen entlang einer Transportrichtung in einem Führungskanal geführt. Die in dem Förderkanal aufgenommenen Verpackungsschalen werden durch Drehen eines Antriebselements mittels eines Antriebs entlang der Transportrichtung gefördert. Hierbei sind die Verpackungsschalen in einem Schraubengang des Antriebselements aufgenommen.

Die Verpackungsschalen sind in dem Förderkanal aufgenommen, während die Verpackungsschalen durch das Drehen des Antriebselements entlang der Transportrichtung gefördert werden. Die Verpackungsschalen sind gleichzeitig in dem Förderkanal und in dem Schraubengang des Antriebselements aufgenommen.

Durch das Führen der Verpackungsschalen in dem Führungskanal kann sichergestellt werden, dass die Bewegung der Verpackungsschalen entlang der Transportrichtung erfolgt. Durch das Führen der Verpackungsschalen in dem Führungskanal kann ein seitliches Abweichen der Verpackungsschalen von der Transportrichtung verhindert werden. Der Förderkanal und das Antriebselement können derart zusammenwirken, dass eine durch Drehen des Antriebselements auf die in dem Schraubengang aufgenommenen Verpackungsschalen wirkende Kraft in eine Bewegung der Verpackungsschalen in dem Führungskanal entlang der Transportrichtung umgesetzt wird. Da die Verpackungsschalen beim Fördern entlang der Transportrichtung sowohl in dem Führungskanal als auch in dem Schraubengang des Antriebselements aufgenommen sind, können die Verpackungsschalen besonders stabil gefördert werden. Sowohl das Führen in dem Führungskanal als auch die Aufnahme in dem Schraubengang kann einem Umfallen oder einem Verrutschen der Verpackungsschalen während des Förderns entgegenwirken.

Die Verpackungen können beim Drehen des Antriebselements durch Eingriff mit dem Antriebselement, insbesondere durch Eingriff mit dem Schraubengang des Antriebselements, entlang der Transportrichtung gefördert werden. Die Verpackungen können beim Drehen des Antriebselements durch Eingriff mit dem Antriebselement, insbesondere durch Eingriff mit dem Schraubengang des Antriebselements, entlang der Transportrichtung geschoben werden. Durch einen Eingriff des Antriebselements mit den Verpackungen kann eine besonders effiziente Kraftübertragung auf die Verpackungen erfolgen. Bei einem Fördern der Verpackungsschalen durch Eingriff mit dem Antriebselement können die Positionen der Verpackungsschalen entlang der Transportrichtung besonders zuverlässig vorgegeben werden.

Das Drehen des Antriebselements mittels des Antriebs kann ein Drehen um eine sich entlang der Transportrichtung erstreckende Achse sein.

Eine Fördergeschwindigkeit der Verpackungsschalen entlang der Transportrichtung kann durch eine Drehgeschwindigkeit des Antriebselements vorgegeben sein. Eine Fördergeschwindigkeit der Verpackungsschalen entlang der Transportrichtung kann durch Einstellen einer Drehgeschwindigkeit des Antriebselements eingestellt werden.

Der Schraubengang kann sich entlang der Transportrichtung erstrecken, insbesondere parallel zu der Transportrichtung. Windungen des Schraubengangs können entlang der Transportrichtung hintereinander angeordnet sein. Der Schraubengang kann sich parallel zu dem Führungskanal erstrecken. Der Schraubengang kann sich um den Führungskanal herum winden.

Das Antriebselement kann eine Wendel umfassen, welche den Schraubengang definiert. Das Antriebselement kann ein helixartig umlaufendes Begrenzungselement umfassen, welches den Schraubengang definiert. Das Antriebselement kann eine zylindrische Hohlspirale umfassen, welche den Schraubengang definiert. Die Wendel, das helixartig umlaufende Begrenzungselement und/oder die zylindrische Hohlspirale kann sich entlang der Transportrichtung erstrecken. Die Wendel, das helixartig umlaufende Begrenzungselement und/oder die zylindrische Hohlspirale kann ein zylindrisches Innenvolumen umschließen. Der Führungskanal kann in dem zylindrischen Innenvolumen vorgesehen sein.

Die Verpackungsschalen können durch Kontakt mit einer Seitenführung in dem Führungskanal gehalten werden. Die Seitenführung kann den Führungskanal bezüglich einer Seitenrichtung begrenzen. Die Seitenrichtung kann zu der Transportrichtung senkrecht stehen. Die Seitenrichtung kann zu einer vertikalen Richtung senkrecht stehen. Die Seitenführung kann als Führungswand ausgebildet sein. Der Schraubengang kann sich um die Seitenführung herum winden. Die Seitenführung kann in einem Innenvolumen vorgesehen sein, welches der Schraubengang umschließt.

Die Seitenführung kann den Führungskanal bezüglich einer ersten Seitenrichtung begrenzen. Wenn eine Drehrichtung des Schraubengangs in Transportrichtung gesehen im Uhrzeigersinn läuft, kann die erste Seitenrichtung eine entlang der Transportrichtung gesehen nach rechts weisende Seitenrichtung sein. Wenn die Drehrichtung des Schraubengangs in Transportrichtung entgegen dem Uhrzeigersinn läuft, kann die erste Seitenrichtung entlang der Transportrichtung gesehen eine nach links weisende Seitenrichtung sein. Die Seitenführung kann so besonders effizient einer seitlichen Komponente einer durch Drehung des Antriebselements auf die Verpackungsschalen wirkenden Kraft entgegenwirken und so die Verpackungsschalen in dem Führungskanal halten.

Optional kann eine weitere Seitenführung vorgesehen sein, die den Führungskanal bezüglich einer der ersten Seitenrichtung entgegengesetzten zweiten Seitenrichtung begrenzt. Da das Antriebselement die Verpackungsschalen aber vorzugsweise ohnehin von der zweiten Seitenrichtung wegtreibt, ist eine Begrenzung des Führungskanals in die zweite Seitenrichtung nicht zwingend erforderlich. Der Führungskanal kann in die zweite Seitenrichtung offen sein.

Die Verpackungsschalen können während des Förderns durch das Antriebselement auf einer Auflagefläche des Führungskanals stehen. Die Auflagefläche des Führungskanals kann sich entlang der Transportrichtung erstrecken, insbesondere parallel zur Transportrichtung. Die Auflagefläche des Führungskanals kann eine horizontale Fläche sein. Die Auflagefläche des Führungskanals kann stationär ausgebildet sein, insbesondere im Gegensatz zu einer durch ein Förderband gebildeten Auflagefläche, welches sich entlang einer Förderrichtung des Förderbands bewegt.

Die Auflagefläche und die Seitenführung können zusammen den Führungskanal bilden. Der Führungskanal kann optional zusätzlich von der der Seitenführung gegenüberliegenden weiteren Seitenführung definiert werden. Der Führungskanal kann zumindest nach unten hin und zu einer Seite geschlossen sein. Der Führungskanal kann zumindest nach oben hin offen sein. Die Auflagefläche und die Seitenführung können einstückig ausgebildet sein. Die Auflagefläche, die Seitenführung und die optional vorgesehen weitere Seitenführung können einstückig ausgebildet sein.

Der Schraubengang kann sich um die Auflagefläche herum winden. Die Auflagefläche kann in einem Innenvolumen vorgesehen sein, welches der Schraubengang umschließt.

In dem Führungskanal aufgenommene Verpackungsschalen können nach oben über die Seitenführung hinausragen. In dem Führungskanal aufgenommene Verpackungsschalen können nach oben aus dem Schraubengang des Antriebselements herausragen.

Die Verpackungsschalen können ein Kunststoffmaterial umfassen oder aus einem Kunststoffmaterial bestehen. Das Kunststoffmaterial kann ein thermoplastisches Kunststoffmaterial sein. Die Verpackungsschalen können ein faserhaltiges Material umfassen oder aus einem faserhaltigen Material bestehen. Das faserhaltige Material kann ein Papiermaterial oder ein Kartonmaterial sen. Die Verpackungsschalen können ein Kunststoffmaterial und ein faserhaltiges Material umfassen.

Die Verpackungsschalen können jeweils einen Boden und eine sich von dem Boden nach oben erstreckende umlaufende Seitenwand umfassen. Die Verpackungsschalen können jeweils eine Befüllöffnung umfassen. Bei einer in dem Führungskanal und/oder dem Schraubengang aufgenommenen Verpackungsschale kann die Befüllöffnung nach oben weisen. Die Verpackungsschalen können jeweils einen Siegelflansch umfassen. Der Siegelflansch kann um die Befüllöffnung umlaufen. Der Siegelflansch kann sich von der Seitenwand nach außen erstrecken.

Ein zumindest den Siegelflansch umfassender oberer Teil einer Verpackungsschale kann nach oben aus dem Führungskanal ragen, insbesondere nach oben über die Seitenführung hinausragen, wenn die Verpackungsschale in dem Führungskanal aufgenommen ist. Ein zumindest den Siegelflansch umfassender oberer Teil der Verpackungsschale kann nach oben über den Schraubengang hinausragen, wenn die Verpackungsschale in dem Führungskanal aufgenommen ist.

Ein zumindest den Siegelflansch umfassender oberer Teil einer Verpackungsschale kann nach oben aus dem Führungskanal ragen, insbesondere nach oben über die Seitenführung hinausragen, wenn die Verpackungsschale in dem Schraubengang aufgenommen ist. Ein zumindest den Siegelflansch umfassender oberer Teil der Verpackungsschale kann nach oben über den Schraubengang hinausragen, wenn die Verpackungsschale in dem Schraubengang aufgenommen ist.

Die Verpackungsschalen können entlang der Transportrichtung in einer Reihe hintereinander in dem Führungskanal und/oder in dem Schraubengang des Antriebselements aufgenommen sein. Die Verpackungsschalen können jeweils in hintereinanderliegenden Windungen des Schraubengangs aufgenommen sein.

Während des Förderns der Verpackungsschalen entlang der Transportrichtung kann ein Abstand der Verpackungsschalen entlang der Transportrichtung durch einen Abstand von Windungen des Schraubengangs definiert sein. Die Windungen des Schraubengangs können entlang der Transportrichtung aufeinanderfolgen. Die Windungen des Schraubengangs können entlang der Transportrichtung äquidistant sein. Der Schraubengang kann entlang der Transportrichtung eine konstante Wendelsteigung aufweisen.

Der Schraubengang kann dazu konfiguriert sein, in dem Führungskanal hintereinander aufgenommene Verpackungsschalen entlang der Transportrichtung in einem konstanten Abstand zueinander zu halten. Durch geeignetes Auslegen des Schraubengangs können die Verpackungsschalen in einem gewünschten Abstand entlang der Transportrichtung hintereinander bereitgestellt werden.

Die Verpackungsschalen können mittels einer Greifereinrichtung aus dem Führungskanal und aus dem Schraubengang entnommen werden. Die Verpackungsschalen können mittels der Greifereinrichtung gleichzeitig aus dem Führungskanal und aus dem Schraubengang entnommen werden. Die Greifereinrichtung kann zumindest eine in dem Führungskanal und in dem Schraubengang aufgenommene Verpackungsschale greifen, insbesondere durch Greifen eines oberen Teils der zumindest einen Verpackungsschale. Der obere Teil kann zumindest den Siegelflansch umfassen. Die Greifereinrichtung kann die zumindest eine Verpackungsschale nach dem Greifen der Verpackungsschale nach oben aus dem Führungskanal und aus dem Schraubengang heben. Die Greifereinrichtung kann die zumindest eine Verpackungsschale nach dem Herausheben aus dem Führungskanal und dem Schraubengang entlang der Transportrichtung bewegen. Die Greifereinrichtung kann die zumindest eine Verpackungsschale nach dem Bewegen entlang der Transportrichtung an zumindest einer Abstellposition absetzen.

Die Greifereinrichtung kann mehrere in dem Führungskanal und dem Schraubengang hintereinander angeordnete Verpackungsschalen gleichzeitig greifen. Die Greifereinrichtung kann die mehreren Verpackungsschalen in demselben Abstandsmuster an der Abstellposition absetzen, in welchem die Verpackungsschalen beim Greifen der Verpackungsschalen durch die Greifereinrichtung in dem Führungskanal und dem Schraubengang vorgelegen sind.

Die Greifereinrichtung kann einen Schalengreifer umfassen. Der Schalengreifer kann sich entlang der Transportrichtung erstrecken. Der Schalengreifer kann entlang der Transportrichtung hintereinanderliegende Aufnahmestellen für die Verpackungsschalen aufweisen. Die Aufnahmestellen können dazu konfiguriert sein, jeweils eine Verpackungsschale aufzunehmen. Der Schalengreifer kann einen linken Schalengreifer und einen rechten Schalengreifer umfassen. Der linke Schalengreifer und der rechte Schalengreifer können von gegenüberliegenden Seiten in die Verpackungsschalen eingreifen und diese somit greifen.

Die Verpackungsschalen können dem Führungskanal und dem Antriebselement mittels einer Zuführeinrichtung zugeführt werden. Die Zuführeinrichtung kann beispielsweise als Fördermittel ausgebildet sein, welches sich entlang der Transportrichtung erstrecken kann. Das Fördermittel kann als Förderband ausgebildet sein. Die Verpackungsschalen können dem Führungskanal und dem Antriebselement durch die Zuführeinrichtung in Form einer Hintereinanderreihung der Verpackungsschalen entlang der Transportrichtung zugeführt werden.

Die Verpackungsschalen können durch das Antriebselement entlang der Transportrichtung in Richtung auf eine Siegelstation zu gefördert werden. Die Greifereinrichtung kann die Verpackungsschalen aus dem Führungskanal und dem Schraubengang in Abstellpositionen innerhalb der Siegelstation umsetzen, nachdem die Verpackungsschalen durch das Antriebselement entlang der Transportrichtung gefördert wurden.

Die Siegelstation kann die Verpackungsschalen durch Ansiegeln eines Deckmaterials an die Verpackungsschalen verschließen. Das Deckmaterial kann insbesondere an die Siegelflansche der Verpackungsschalen angesiegelt werden. Das Deckmaterial kann der Siegelstation als Materialbahn zugeführt werden. Das Deckmaterial kann ein Kunststoffmaterial umfassen oder aus einem Kunststoffmaterial bestehen. Das Kunststoffmaterial kann ein thermoplastisches Kunststoffmaterial sein.

Die Greifereinrichtung kann die verschlossenen Verpackungsschalen nach dem Ansiegeln des Deckmaterials weiter entlang der Transportrichtung aus der Siegelstation heraus transportieren und auf einer Abführeinrichtung absetzen. Die Abführeinrichtung kann beispielsweise als Förderband ausgebildet sein. Die Greifereinrichtung kann gleichzeitig unverschlossene Verpackungen aus dem Führungskanal in die Siegelstation transportieren und verschlossene Verpackungen aus der Siegelstation auf die Abführeinrichtung transportieren.

Gemäß einem weiteren Aspekt der Erfindung wird eine Vorrichtung zum Bereitstellen von Verpackungsschalen bereitgestellt. Die Vorrichtung umfasst eine Führung, ein Antriebselement und einen Antrieb. Die Führung stellt einen Führungskanal zum Führen von Verpackungsschalen für eine Bewegung entlang einer Transportrichtung bereit. Das Antriebselement definiert einen sich entlang der Transportrichtung erstreckenden Schraubengang. Der Antrieb ist zum Drehen des Antriebselements um eine sich parallel zu der Transportrichtung erstreckende Drehachse konfiguriert. Das Antriebselement ist dazu konfiguriert, bei Drehung des Antriebselements in dem Führungskanal geführte Verpackungen durch Eingriff mit dem Antriebselement entlang der Transportrichtung zu fördern.

Die Führung kann zumindest eine Seitenführung aufweisen. Die zumindest eine Seitenführung kann dazu konfiguriert sein, die Verpackungsschalen durch Kontakt mit der Seitenführung in dem Führungskanal zu halten.

Die zumindest eine Seitenführung kann eine erste Seitenführung und optional eine zweite Seitenführung umfassen. Die erste Seitenführung kann den Führungskanal bezüglich einer ersten Seitenrichtung begrenzen. Wenn eine Drehrichtung des Schraubengangs in Transportrichtung gesehen im Uhrzeigersinn läuft, kann die erste Seitenrichtung eine entlang der Transportrichtung gesehen nach rechts weisende Seitenrichtung sein. Wenn die Drehrichtung des Schraubengangs in Transportrichtung entgegen dem Uhrzeigersinn läuft, kann die erste Seitenrichtung entlang der Transportrichtung gesehen eine nach links weisende Seitenrichtung sein. Optional kann die zumindest eine Seitenführung eine zweite Seitenführung aufweisen, die den Führungskanal bezüglich einer der ersten Seitenrichtung entgegengesetzten zweiten Seitenrichtung begrenzt. Alternativ kann der Führungskanal in die zweite Seitenrichtung offen sein.

Die Führung kann eine Auflagefläche zur Aufnahme vom Verpackungsschalen aufweisen. Die Auflagefläche kann eine horizontale Fläche sein. Die Auflagefläche und die zumindest eine Seitenführung können als separate Teile oder einstückig ausgebildet sein.

Der Schraubengang kann dazu konfiguriert sein, die Verpackungsschalen aufzunehmen, während die Verpackungsschalen in dem Führungskanal geführt sind.

Das Antriebselement kann eine Wendel umfassen, welche den Schraubengang definiert. Das Antriebselement kann ein helixartig umlaufendes Begrenzungselement umfassen, welches den Schraubengang definiert. Das Antriebselement kann eine zylindrische Hohlspirale umfassen, welche den Schraubengang definiert.

Der Schraubengang kann sich um die Führung herum winden.

Gemäß einem weiteren Aspekt der Erfindung wird eine Verpackungsmaschine bereitgestellt. Die Verpackungsmaschine umfasst die Vorrichtung zum Bereitstellen von Verpackungsschalen. Zudem umfasst die Verpackungsmaschine eine Greifereinrichtung und eine Siegelstation. Die Greifereinrichtung ist dazu konfiguriert, Verpackungsschalen aus dem Führungskanal und aus dem Schraubengang zu entnehmen und in die Siegelstation zu verbringen.

Die Siegelstation kann dazu konfiguriert sein, die Verpackungsschalen durch Ansiegeln eines Deckmaterials zu verschließen. Das Deckmaterial kann insbesondere an Siegelflanschen der Verpackungsschalen angesiegelt werden.

Gemäß den beschriebenen Aspekten der Erfindung werden ein Verfahren zum Bereitstellen von Verpackungsschalen, eine Vorrichtung zum Bereitstellen von Verpackungsschalen und eine Verpackungsmaschine bereitgestellt. Merkmale und Erläuterungen, welche in Bezug auf einen dieser Aspekte beschrieben wurden, lassen sich auf die jeweils anderen Aspekte übertragen und mit diesen kombinieren. Das Verfahren kann anhand der Vorrichtung oder anhand der Verpackungsmaschine durchführbar sein oder durchgeführt werden. Die Vorrichtung kann zum Durchführen des Verfahrens geeignet, ausgebildet und/oder konfiguriert sein. Die Verpackungsmaschine kann zum Durchführen des Verfahrens geeignet, ausgelegt und/oder konfiguriert sein.

Im Folgenden wird die Erfindung anhand einer Ausführungsform weiter erläutert.
Figur 1 zeigt eine schematische Perspektivansicht einer Verpackungsmaschine gemäß einer Ausführungsform.
Figur 2 zeigt eine schematische Perspektivansicht der Verpackungsmaschine gemäß der Ausführungsform aus einem anderen Blickwinkel.
Figur 3 zeigt eine schematische Perspektivansicht einer Vorrichtung zum Bereitstellen von Verpackungsschalen der Verpackungsmaschine gemäß der Ausführungsform.
Figur 4 zeigt eine schematische Ansicht der Vorrichtung zum Bereitstellen von Verpackungsschalen mit Blickrichtung entlang der Transportrichtung.
Figur 5 zeigt in schematischer Perspektivansicht eine Abfolge von aufeinanderfolgenden Betriebszuständen beim Entnehmen von Verpackungsschalen aus der Vorrichtung zum Bereitstellen der Verpackungsschalen mittels einer Greifereinrichtung der Verpackungsmaschine gemäß der Ausführungsform.

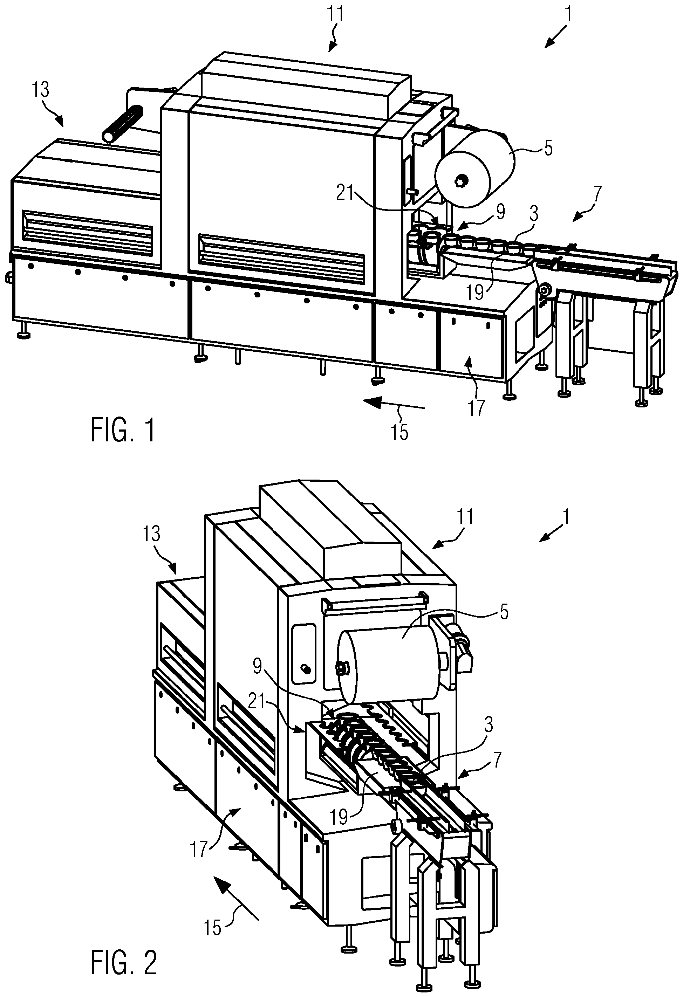

Die Figuren 1 und 2 zeigen eine Verpackungsmaschine 1 gemäß einer Ausführungsform. Die Verpackungsmaschine 1 ist eine Schalenverschließmaschine zum Verschließen von Verpackungsschalen 3 mittels eines Deckmaterials 5. Die Verpackungsmaschine 1 umfasst eine Zuführeinrichtung 7, eine Vorrichtung 9 zum Bereitstellen der Verpackungsschalen 3, eine Siegelstation 11 und eine Abführeinrichtung 13, welche in der genannten Reihenfolge entlang einer Transportrichtung 15 hintereinander an einem Maschinengestell 17 angeordnet sind.

Die Zuführeinrichtung 7 umfasst ein Förderband 19, welches die Verpackungsschalen 3 in einer sich entlang der Transportrichtung 15 erstreckenden Linie hintereinander aufgereiht empfängt und entlang der Transportrichtung 15 transportiert. Die Vorrichtung 9 zum Bereitstellen der Verpackungsschalen 3 ist bezüglich der Transportrichtung 15 stromabwärts des Förderbands 19 angeordnet und empfängt die Verpackungsschalen 3 von dem Förderband 19. Die Vorrichtung 9 fördert die Verpackungsschalen 3 weiter entlang der Transportrichtung 15 in Bereitstellungspositionen. Die in den Bereitstellungspositionen entlang der Transportrichtung 15 in einer Linie hintereinander angeordneten Verpackungsschalen 3 werden dann von einer Greifereinrichtung 21 der Verpackungsmaschine 1 aufgenommen und in Transportrichtung 15 weiter stromabwärts in Aufnahmepositionen innerhalb der Siegelstation 11 abgesetzt.

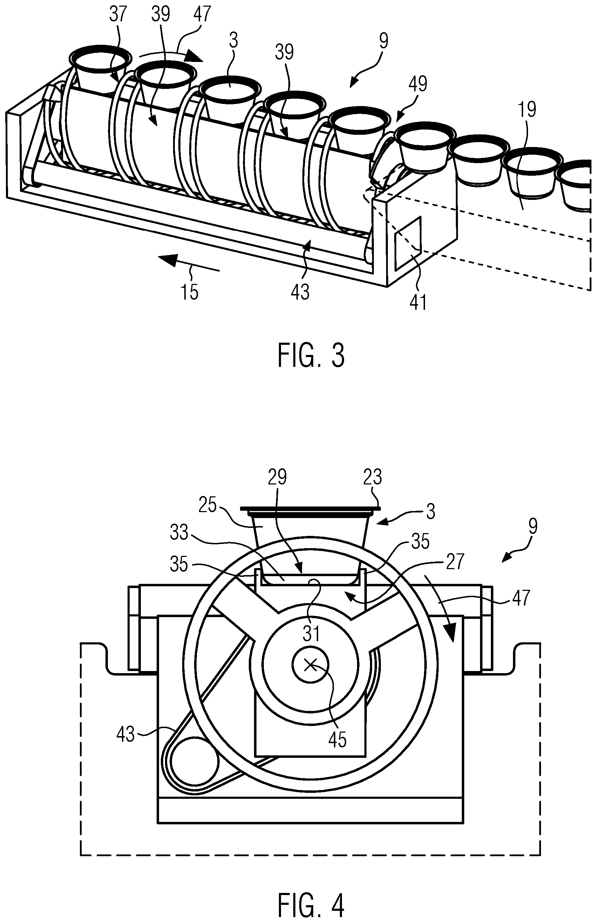

Wie beispielsweise in Figur 4 gut ersichtlich, umfassen die Verpackungsschalen 3 jeweils einen Siegelflansch 23, welcher um eine nach oben gerichtete Befüllöffnung umläuft und seitlich von einer Seitenwand 25 der Verpackungsschale 3 absteht. In der Siegelstation 11 werden die Verpackungsschalen 3 durch Ansiegeln des Deckmaterials 5 an den Siegelflansch 23 luftdicht verschlossen. Die verschlossenen Verpackungsschalen 3 werden dann wiederum durch die Greifereinrichtung 21 gegriffen und bezüglich der Transportrichtung 15 weiter stromabwärts auf der Abführeinrichtung 13 abgesetzt, von wo aus die verschlossenen Verpackungsschalen 3 entnommen oder weitertransportiert werden können.

Die Figuren 3 und 4 zeigen Details der Vorrichtung 9 zum Bereitstellen der Verpackungsschalen 3, wobei Figur 3 eine perspektivische Ansicht zeigt und Figur 4 eine Ansicht mit Blickrichtung entlang der Transportrichtung 15. Wie am besten aus Figur 4 ersichtlich, umfasst die Vorrichtung 9 eine Führung 27 für die Verpackungsschalen 3. Die Führung 27 definiert einen sich entlang der Transportrichtung 15 erstreckenden Führungskanal 29. Die Führung 27 umfasst eine horizontale Auflagefläche 31, auf welcher die Verpackungsschalen 3 mit ihrem Boden 33 stehen. Zudem umfasst die Führung 27 zwei Seitenführungen 35, welche den Führungskanal 27 auf gegenüberliegenden lateralen Seiten begrenzen. Die Seitenführungen 35 erstrecken sich parallel zu der Transportrichtung 15. Die Seitenführungen 35 begrenzen eine Bewegung der in dem Führungskanal 29 aufgenommenen Verpackungsschalen 3 in senkrecht zu der Transportrichtung 15 stehende Seitenrichtungen.

Wie am besten in Figur 3 sichtbar, umfasst die Vorrichtung 9 zudem ein Antriebselement 37. Das Antriebselement 37 kann als eine Wendel oder als ein helixartig umlaufendes Begrenzungselement oder als eine zylindrische Hohlspirale beschrieben werden. Das Antriebselement 37 definiert einen Schraubengang 39, dessen Windungen entlang der Transportrichtung 15 aufeinanderfolgen. Der Schraubengang 39 windet sich um die Führung 27 und den Führungskanal 29 herum. Ein Antrieb 41 ist über eine Übertragungseinrichtung 43 mit dem Antriebselement 37 verbunden, um das Antriebselement 37 um eine sich entlang der Transportrichtung 15 erstreckende Achse 45 zu drehen. Die Drehrichtung ist in den Figuren 3 und 4 jeweils durch den Pfeil 47 dargestellt.

An einem bezüglich der Transportrichtung 15 stromaufwärts gelegenen Ende 49 der Vorrichtung 9 werden die Verpackungsschalen 3 nacheinander von dem Förderband 19 in den Führungskanal 29 abgegeben. Hierdurch gelangen die Verpackungsschalen 3 auch gleich in den Schraubengang 39 des Antriebselements 37. Durch Kontakt mit dem Antriebselement 37 werden die Verpackungsschalen 3 bei der Drehung des Antriebselements 37 innerhalb des Schraubengangs 39 entlang der Transportrichtung 15 gefördert. Ein seitliches Ausbrechen der Verpackungsschalen 3 wird durch den Führungskanal 29 verhindert.

Wie beschrieben, hat der Führungskanal in der dargestellten Ausführungsform zwei gegenüberliegende Seitenführungen 35. Es wäre aber ausreichend, wenn lediglich auf einer Seite eine Seitenführung 35 vorgesehen ist und der Führungskanal 29 zu der gegenüberliegenden Seite hin offen ist. Wenn, wie in den Figuren 3 und 4 gezeigt, die Drehrichtung 47 des Antriebselements 37 entlang der Transportrichtung 15 gesehen im Uhrzeigersinn erfolgt, könnte die in Transportrichtung 15 gesehen linke Seitenführung 35 weggelassen werden und der Führungskanal 29 nach links hin offen sein. Wenn die Drehrichtung 47 des Antriebselements 37 hingegen entlang der Transportrichtung 15 gesehen entgegen dem Uhrzeigersinn verlaufen würde, könnte die entlang der Transportrichtung 15 gesehen rechte Seitenführung 35 weggelassen werden und der Führungskanal 29 nach rechts hin offen sein.

In der dargestellten Ausführungsform weist der Schraubengang 39 entlang der Transportrichtung 15 eine konstante Schraubensteigung auf. Entlang der Transportrichtung 15 aufeinanderfolgende Windungen des Schraubengangs 39 sind somit äquidistant. Dies hat zur Folge, dass die in dem Führungskanal 29 und dem Schraubengang 39 aufgenommenen Verpackungsschalen 3 entlang der Transportrichtung 15 einen konstanten Abstand aufweisen. Ein konstanter Abstand zwischen aufeinanderfolgenden Verpackungsschalen 3 entlang der Transportrichtung 15 ist für viele Anwendungen vorteilhaft. Wenn gewünscht, kann durch eine geeignete Auslegung des Schraubengangs 39 aber auch erreicht werden, dass entlang der Transportrichtung 15 aufeinanderfolgende Verpackungsschalen 3 unterschiedliche Abstände entlang der Transportrichtung 15 aufweisen.

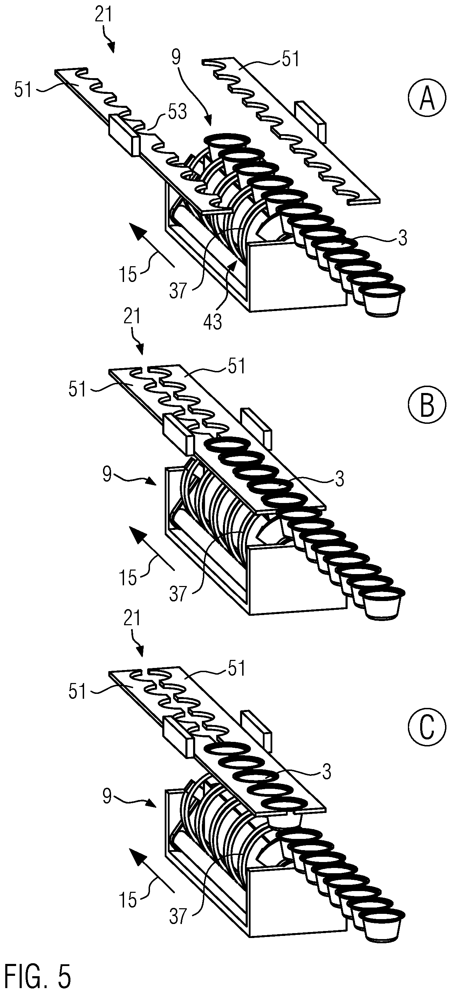

Während die Verpackungsschalen 3 durch die Vorrichtung 9 entlang der Transportrichtung 15 gefördert werden, steht ein den Siegelflansch 23 der Verpackungsschalen 3 umfassender oberer Bereich der Verpackungsschalen 3 sowohl über die Seitenführungen 35 als auch über das Antriebselement 37 nach oben vor. Dies erleichtert ein Aufnehmen der Verpackungsschalen 3 durch die Greifereinrichtung 21. Teil A von Figur 5 zeigt eine Betriebssituation, in welcher eine Gruppe von Verpackungsschalen 3 durch die Vorrichtung 9 in Bereitstellungspositionen gefördert wurden. In den Bereitstellungspositionen sind die Verpackungsschalen 3 noch in dem Führungskanal 29 und in dem Schraubengang 39 aufgenommen. In Teil A von Figur 5 sind fünf Verpackungsschalen 3 in Bereitstellungspositionen dargestellt. Hierbei handelt es sich um die fünf am weitesten entlang der Transportrichtung 15 fortgeschrittenen Verpackungsschalen 3.

Die Greifereinrichtung 21 umfasst zwei Schalengreifer 51, welche bezüglich der Transportrichtung 15 auf zwei gegenüberliegenden lateralen Seiten der in den Bereitstellungspositionen stehenden Verpackungsschalen 3 vorgesehen sind. Die Schalengreifer 51 sind in Teil A von Figur 5 in einer Warteposition dargestellt, in welcher die Schalengreifer 15 seitlich von den Verpackungsschalen 3 beabstandet sind. Wenn die Verpackungsschalen 3 durch die Vorrichtung 9 in die Bereitstellungspositionen verbracht wurden, werden die Schalengreifer 51 aufeinander zu verfahren und kommen so von gegenüberliegenden Seiten mit den in den Bereitstellungspositionen befindlichen Verpackungsschalen 3 in Eingriff. Die Schalengreifer 51 weisen jeweils entlang der Transportrichtung 15 hintereinanderliegende Aufnahmestellen 53 auf. Die Aufnahmestellen 53 sind als Ausnehmungen ausgebildet. Wenn die Schalengreifer 51, wie in Teil B von Figur 5 gezeigt, nach innen zusammengefahren wurden, wirken gegenüberliegende Aufnahmestellen 53 zusammen, um jeweils eine Verpackungsschale 3 unterhalb des Siegelflansches 23 zu umschließen. Wie in Teil C von Figur 5 gezeigt, werden die Schalengreifer 51 anschließend zusammen entlang einer vertikalen Richtung angehoben. Hierbei greift jeweils eine nach oben gerichtete Fläche der Schalengreifer 51 mit einer unteren Fläche der Siegelflansche 23 der Verpackungsschalen 3 ein, wodurch die Verpackungsschalen 3 aus den Bereitstellungspositionen angehoben werden und hierdurch aus dem Führungskanal 29 und aus dem Schraubengang 39 gehoben werden. Anschließend werden die Verpackungsschalen 3 durch eine gemeinsame Bewegung der Schalengreifer 51 entlang der Transportrichtung 15 in die Siegelstation 11 verbracht. Die in Figur 5 stromabwärts gelegenen unbesetzten Aufnahmestellen 53 können in einem vorangegangenen Arbeitstakt in der Siegelstation 11 verschlossene Verpackungsschalen 3 aufnehmen und gleichzeitig mit dem Einbringen der neuen Verpackungsschalen 3 in die Siegelstation 11 aus der Siegelstation 11 heraustransportieren und an die Abgabevorrichtung 13 übergeben.

## Patentansprüche

1. Verfahren zum Bereitstellen von Verpackungsschalen (3), umfassend:
Führen von Verpackungsschalen (3) entlang einer Transportrichtung (15) in einem Führungskanal (29); und
entlang der Transportrichtung (15) Fördern der in dem Führungskanal (29) aufgenommenen Verpackungsschalen (3) durch Drehen eines Antriebselements (37) mittels eines Antriebs (41), wobei die Verpackungsschalen (3) in einem Schraubengang (39) des Antriebselements (37) aufgenommen sind.

2. Verfahren nach Anspruch 1, wobei die Verpackungen (3) beim Drehen des Antriebselements (37) durch Eingriff mit dem Antriebselement (37) entlang der Transportrichtung (15) gefördert werden, insbesondere geschoben werden.

3. Verfahren nach Anspruch 1 oder 2, wobei das Antriebselement (37) eine Wendel umfasst, welche den Schraubengang (39) definiert, und/oder ein helixartig umlaufendes Begrenzungselement umfasst, welches den Schraubengang (39) definiert, und/oder eine zylindrische Hohlspirale umfasst, welche den Schraubengang (39) definiert.

4. Verfahren nach einem der vorangehenden Ansprüche, wobei die Verpackungsschalen (3) durch Kontakt mit einer Seitenführung (35) in dem Führungskanal (29) gehalten werden.

5. Verfahren nach einem der vorangehenden Ansprüche, wobei die Verpackungsschalen (3) während des Förderns durch das Antriebselement (37) auf einer Auflagefläche (31) des Führungskanals (29) stehen.

6. Verfahren nach einem der vorangehenden Ansprüche, wobei sich der Schraubengang (39) um die Auflagefläche (31) herum windet.

7. Verfahren nach einem der vorangehenden Ansprüche, wobei während des Förderns der Verpackungsschalen (3) ein Abstand der Verpackungsschalen (3) entlang der Transportrichtung (15) durch einen Abstand von Windungen des Schraubengangs (39) definiert ist.

8. Verfahren nach einem der vorangehenden Ansprüche, zudem umfassend: Entnehmen der Verpackungsschalen (3) aus dem Führungskanal (29) und aus dem Schraubengang (39) mittels einer Greifereinrichtung (21).

9. Vorrichtung (9) zum Bereitstellen von Verpackungsschalen (3), umfassend:
eine Führung (27), welche einen Führungskanal (29) zum Führen von Verpackungsschalen (3) für eine Bewegung entlang einer Transportrichtung (15) bereitstellt;
ein Antriebselement (37), welches einen sich entlang der Transportrichtung (15) erstreckenden Schraubengang (39) definiert; und
einen Antrieb (41), welcher zum Drehen des Antriebselements (37) um eine sich parallel zu der Transportrichtung (15) erstreckende Drehachse (45) konfiguriert ist;
wobei das Antriebselement (37) dazu konfiguriert ist, bei Drehung des Antriebselements (37) in dem Führungskanal (29) geführte Verpackungen (3) durch Eingriff mit dem Antriebselement (37) entlang der Transportrichtung (15) zu fördern.

10. Vorrichtung nach Anspruch 9, wobei die Führung (27) zumindest eine Seitenführung (35) aufweist.

11. Vorrichtung nach Anspruch 9 oder 10, wobei die Führung (27) eine Auflagefläche (31) zur Aufnahme von Verpackungsschalen (3) aufweist, wobei die Auflagefläche (31) insbesondere eine horizontale Fläche ist.

12. Vorrichtung nach einem der Ansprüche 9 bis 11, wobei der Schraubengang (39) dazu konfiguriert ist, die Verpackungsschalen (3) aufzunehmen, während die Verpackungsschalen (3) in dem Führungskanal (29) geführt sind.

13. Vorrichtung nach einem der Ansprüche 9 bis 12, wobei das Antriebselement (37) eine Wendel umfasst, welche den Schraubengang (39) definiert, und/oder ein helixartig umlaufendes Begrenzungselement umfasst, welches den Schraubengang (39) definiert, und/oder eine zylindrische Hohlspirale umfasst, welche den Schraubengang (39) definiert.

14. Vorrichtung nach einem der Ansprüche 9 bis 13, wobei sich der Schraubengang (39) um die Führung (27) herum windet.

15. Verpackungsmaschine (1), umfassend:
eine Vorrichtung (9) nach einem der Ansprüche 9 bis 14;
eine Greifereinrichtung (21); und
eine Siegelstation (11);
wobei die Greifereinrichtung (21) dazu konfiguriert ist, Verpackungsschalen (3) aus dem Führungskanal (29) und aus dem Schraubengang (39) zu entnehmen und in die Siegelstation (11) zu verbringen.
